# EUROPÄISCHE PATENTSCHRIFT

(11) **EP 2 386 058 B1**
(45) Veröffentlichungstag und Bekanntmachung des Hinweises auf die Patenterteilung: **27.04.2016**
(21) Anmeldenummer: 09796298.9
(22) Anmeldetag: 03.12.2009
(51) Int. Cl.: G01N 21/64

(54) **OPTISCHER SENSOR UND VORRICHTUNG DAMIT SOWIE VERFAHREN ZU IHRER HERSTELLUNG**
OPTICAL SENSOR, DEVICE HAVING THE SAME, AND METHOD FOR PRODUCING THE SAME
CAPTEUR OPTIQUE, DISPOSITIF MUNI DE CE CAPTEUR OPTIQUE ET PROCÉDÉ DE FABRICATION DE CE DISPOSITIF

(30) Priorität: 07.01.2009 DE 102009003971
(43) Veröffentlichungstag der Anmeldung: 16.11.2011
(73) Patentinhaber: Sartorius Stedim Biotech GmbH, 37079 Göttingen (DE)
(72) Erfinder: WÜNN, Eberhard, 37077 Göttingen (DE); BAUMFALK, Reinhard, 37083 Göttingen (DE); RIECHERS, Daniel, 30451 Hannover (DE); LÜDERS, Julia, 31246 Lahstedt (DE)
(74) Vertreter: Müller-Boré & Partner Patentanwälte PartG mbB
(86) Internationale Anmeldenummer: PCT/EP2009/008604
(87) Internationale Veröffentlichungsnummer: WO 2010/078893

(56) Entgegenhaltungen:
- EP-A1- 0 584 721
- EP-A2- 0 300 990
- WO-A1-00/11471
- WO-A1-2004/077035
- US-B2- 7 390 462
- KORPOSH S.O. ET AL: 'Films based on bacteriorhodopsin in sol-gel matrices' PROCEEDINGS OF SPIE INTEGRATED OPTICS: THEORY AND APPLICATIONS Bd. 5956, 595616, 16 September 2005, US, Seiten 1 - 8, XP055218453 DOI: 10.1117/12.622631 ISSN: 0277-786X ISBN: 978-1-62841-799-9

## Beschreibung

Die Erfindung betrifft einen durch Bestrahlen sterilisierbaren optischen Sensor zur Bestimmung mindestens eines Parameters in einem Medium, eine Vorrichtung welche einen solchen optischen Sensor aufweist und ein Verfahren zur Herstellung des Sensors sowie der Vorrichtung.

Optische Sensoren werden insbesondere in Einweg-, Misch- und Bioreaktoren bzw. -behältern in der Medizintechnik und Biotechnologie eingesetzt. In diesen und ähnlichen Anwendungsgebieten ist es oft nötig, einen Behälter vor der Benutzung zu sterilisieren. Auf dem Gebiet der Einwegprodukte hat sich eine Sterilisation mittels Strahlung, insbesondere Gamma-Strahlung, bewährt, welche jedoch schädlich für optische Sensoren sein kann. Daher wird für derartige Sensoren ein effektives Schutzsystem benötigt, das zugleich kostengünstig realisiert werden kann.

WO 00/11471 A1 offenbart eine flüssigkeitsdurchlässige metallische Beschichtung in Verbindung mit einem Fluoreszenz-basierten optischen Sensor. Die metallische Beschichtung ist auf einer Sensor-Membran aufgebracht. Die Sensor-Membran ist auf einem im Wesentlichen lichtdurchlässigen Substrat aufgebracht. Wenn Licht von einer Lichtquelle durch das im Wesentlichen lichtdurchlässige Substrat auf die Sensor-Membran trifft, reflektiert die metallische Beschichtung das Licht der Lichtquelle als auch Fluoreszenzlieht, welches durch den Sensor erzeugt wird, so dass im Wesentlichen kein Licht die Probe erreicht, wo das Licht gestreut und/oder absorbiert werden kann.

EP 0 300 990 A2 offenbart eine Deckschicht zur probenseitigen Anbringung an optischen lonensensoren. Die Deckschicht besteht aus einer hydrophilen ionenpermeablen Polymermembran, welche zur Unterdrückung von Fehllicht reduktive oder reduktivzementativ abgeschiedene Edelmetallpigmente aus der Gruppe Ag, Au und Pt enthält. Die Polymermembran wird mit einem gelösten Salz eines Edelmetalls und einem Reduktionsmittel behandelt, wodurch das Edelmetallpigment in kollodialer Verteilung in die Polymermembran eingelagert wird.

EP 0 584 721 A1 offenbart ein Analyseelement zur Bestimmung eines Analyten in einer flüssigen Probe, insbesondere einer Körperflüssigkeit. Das Analyseelement enthält in mindestens einer Testschicht ein Reagenzsystem, dessen Reaktion mit der Probe zu einer mittels eines Meßlichtstrahls optisch nachweisbaren für die Analyse charakteristischen Veränderung einer Detektionsschicht führt. Das Analyseelement umfasst weiter eine mindestens ein Reagenz des Reagenzsystems enthaltende flüssigkeitsabsorbierende Reagenzschicht, bei welchem eine unmittelbar auf diese aus der Gasphase aufgebrachte Metallisierung in einer solchen Dicke aufweist, dass sie höchstens 50 % des Meßlichtstrahls passieren läßt.

WO 2004/077035 offenbart einen CO₂-Sensor mit einem pH-Indikator und ein langlebiges Referenz-Luminophor. Das Referenz-Luminophor ist entweder in Sol-Gel-Teilchen dotiert und mit dem pH-Indikator in einer porösen Sol-Gel-Matrix ko-immobilisiert, oder in einer separaten sauerstoffundurchlässigen Schicht immobilisiert und der pH-Indikator wird in einer Sol-Gel-Matrix über die sauerstoffundurchlässige Schicht gelegt.

Aus WO 02/056023 A1 und DE 10,051,220 A1 sind optische Sensoren zur Messung mindestens eines Parameters in einer Probe bekannt. Diese Sensoren basieren auf einer Vorrichtung zur Anregung der Fluoreszenz eines in einem Probengefäß bzw. Reaktor in einer Matrix immobilisierten Analyt-sensitiven Fluoreszenzfarbstoffes, der in zumindest indirektem Kontakt zur Probe steht und einer Auswertungsvorrichtung für das resultierende Fluoreszenzantwortsignal. Die Auswertung bzw. die Bestimmung der Analyt-Konzentration kann hierbei sowohl durch die Verwertung der Fluoreszenzabklingzeit als auch der Fluoreszenzintensität erfolgen. Ein nachteiliges intrinsisches Problem dieser Sensorsysteme resultiert aus dem Photobleichen der verwendeten Fluoreszenzfarbstoffe, welches die Langzeitperformance dieser Sensoren durch eine allmähliche Verringerung des Signal-Rausch-Verhältnisses verschlechtert. Das Photobleichen wird sowohl durch die eigentliche Messung und die damit verbundene Anregung des Fluorophors mit Licht geeigneter Wellenlänge, als auch durch Fremdlicht, welches beispielsweise von außen durch die Wandung eines transparenten Bioreaktors treten kann, ausgelöst. Weiterhin kann die Messung durch Wechselwirkung des Fluoreszenz-Anregungslichtes mit in der Probe vorliegenden Fluorophoren verfälscht werden.

Aus US 7,390,462 B2 ist ein Sensor bekannt, bei dem der Fluoreszenzfarbstoff in einer hydrophilen Matrix immobilisiert vorliegt. Hierbei wird ein Sensor mit dem pHsensitiven Fluoreszenzfarbstoff MA-HPDS in einem Hydrogel vorliegend beansprucht. Nachteilig ist, dass derartige hydrophile optische Sensoren bei einer Sterilisation mit Gammastrahlung dosisabhängig geschädigt werden. Eine solche Strahlung wird insbesondere in der Labortechnologie bei Behältern aus Polymeren angewendet. Es verringern sich sowohl die Intensität der Fluoreszenz des Farbstoffs bzw. der Farbstoffe, als auch die Sensitivität des Sensors gegenüber der Messgröße. Eine besonders starke Schädigung eines solchen Sensors tritt auf, wenn er während der Gamma-Sterilisierung in Kontakt mit einem größeren Volumen an Luft, bzw. auch mit üblichen Schutzgasen wie z.B. Stickstoff oder Argon steht. Bei der Gamma-Sterilisierung werden die Gase teilweise ionisiert. Diese Ionen bzw.

Radikalionen reagieren bei der Sterilisation eines gasgefüllten Polymer-Behälters an den Wänden ab, aber auch mit den in den Sensoren befindlichen Farbstoffen. Auf porösen, hydrophilen Matrizes basierende Sensoren sind hierfür besonders anfällig, da die Sensorchemie prinzipbedingt an der Oberfläche, bzw. inneren Oberfläche der Matrix immobilisiert vorliegen muss, damit die zu vermessende Probe mit der Sensorchemie in Kontakt kommen kann. Das Ausmaß der Schädigung hängt erstens von der Bestrahlungsdosis und zweitens vom Oberfläche-VolumenVerhältnis des bestrahlten, den Sensor enthaltenden, Behälters ab. Dieses Verhältnis bestimmt die Anzahl an Ionen und Radikalionen, welche den Sensor, bzw. die darin enthaltene Sensorchemie schädigen.

Der Erfindung liegt daher die Aufgabe zugrunde, zum einen einen optischen Sensor und eine Vorrichtung damit zu schaffen, dessen Empfindlichkeit gegenüber Fremdlichteinflüssen, Fluorophoren und Strahlung, insbesondere Gammastrahlung, herabgesetzt ist und gleichzeitig einfach hergestellt werden kann. Weiterhin ist es eine Aufgabe ein Verfahren zu ihrer Herstellung anzugeben.

Die erste Aufgabe wird durch einen Sensor gemäß Anspruch 1 gelöst. Der erfindungsgemäße optische Sensor misst einen oder mehrere Parameter in einem Medium. Im Wesentlichen weist der Sensor drei übereinander gelagerte Schichten auf. Als Basisschicht dient ein transparenter Träger. Auf diesem sitzt eine Matrix, die wenigstens einen Fluoreszenzfarbstoff enthält. Zum Schutz der letztgenannten Schicht ist auf dieser eine Edelmetallschicht aufgebracht. Durch diese Edelmetallschicht wird eine optische Isolierung gegenüber Fremdlichteinflüssen und Fluorophoren gewährleistet. Das Fluoreszenzlicht von in einer den Sensor umgebenden Kulturbrühe befindlichen Fluorophoren, wie z.B.

NADPH oder Riboflavin, wird durch die Edelmetallschicht isoliert, wodurch ein nachteiliger Einfluss der Fluorophore in der Kulturbrühe auf die Messung verhindert wird. Zusätzlich wird die Empfindlichkeit gegenüber bei der Gamma-Bestrahlung entstehenden Reaktivteilchen stark herabgesetzt. Auch hierdurch wird ein besseres Signal-Rausch-Verhältnis, sowie eine allgemein höhere Sensitivität des Sensorelementes gegenüber seiner Messgröße erreicht. Zugleich verhalten sich Edelmetalle inert gegenüber wässrigen Lösungen bzw. gegenüber in der Biotechnologie oder Pharmazie üblichen Zellkultur- oder Fermentationsmedien. Die Edelmetallschicht erfüllt zusätzlich eine Sicherheits- und Stabilisierungsfunktion gegenüber der sich darunter befindlichen Sensorchemie in Form von der den mindestens einen Fluoreszenzfarbstoff enthaltenden Matrix.

Weiterhin ist die Matrix des optischen Sensors porös und die Edelmetallschicht verschließt diese poröse Matrix nicht, da der Kontakt der Sensorchemie zum vermessenden Medium oftmals weiterhin möglich sein muss. Optische Sensoren, die dies erfordern, können somit das Medium direkt kontaktieren. Dies wird erreicht, indem die Rauhtiefe der Oberfläche im wesentlichen einen höheren Wert besitzt als die Schichtdicke der Edelmetallschicht. Eine poröse Matrix mit nicht ebener Oberfläche besitzt zusätzlich den Vorteil, dass die Aufbringung der Edelmetallschicht einfach und kostengünstig erfolgt, da eine derartige Oberfläche der darauf aufzubringenden Edelmetallschicht eine entsprechende Struktur gibt, welche die poröse Matrix nicht verschließt. Die Edelmetallschicht selber muss nicht erneut perforiert oder entsprechend stellenweise aufgebracht werden. Des weiteren werden durch die Auftragung der Edelmetallschicht die Öffnungen an der Oberfläche querschnittstechnisch verfeinert was ein kostengünstiges Herstellungsverfahren der Matrix erlaubt. Gemäß einer bevorzugten Ausführungsform der Erfindung ist der optische Sensor durch Strahlung unter Erhalt seiner Funktionsfähigkeit sterilisierbar. Die Empfindlichkeit gegenüber einer Sterilisierung, beispielsweise mittels ionisierender Strahlung, Gammastrahlung, UV-C-, Beta- oder Elektronenstrahlung ist durch die Edelmetallschicht stark herabgesetzt. Die durch die Strahlung gebildeten reaktiven Ionen und Radikale in der den Sensor umgebenden Gasphase reagieren nicht mehr mit der Matrix und dem Fluoreszenzfarbstoff bzw. den Fluoreszenzfarbstoffen selbst. Somit wird ein besseres Signal-Rausch-Verhältnis, sowie eine allgemein höhere Sensitivität des optischen Sensors gegenüber seiner Messgröße erreicht. Die Messgrößen können hierbei z.B. der pH-Wert, die Gelöstsauerstoffkonzentration oder andere Parameter sein.

Aus z.B. dem Dokument "Films based on bacteriorhodopsin in sol-gel matrices" (S. O Korposh et al; Proceedings of SPIE, Bd. 5956, 16. September 2005 (2005-09-16), US ISSN: 0277-786X, DOI: 10.1117/12.622631) sind Sensorfilme, die auf einer porösen Sol-Gel-Matrix mit einem Fluoreszenzfarbstoff basieren, bekannt.

Gemäß einer weiteren bevorzugten Ausführungsform der Erfindung ist die Matrix des optischen Sensors hydrophil. Besondere Ausführungen können eine Sol-Gel-Matrix oder ein Hydrogel sein, in welchem der Fluoreszenzfarbstoff immobilisiert vorliegt. Die hydrophile Eigenschaft ist besonders für optische Sensoren nötig, deren in der Matrix eingebettete Fluoreszenzfarbstoff für ein wässriges Medium zugänglich sein muss. Optische Sensoren, welche eine hydrophile Matrix aufweisen sind naturgemäß äußerst sensibel gegenüber einer Sterilisierung, z.B. mittels Gammastrahlung. Die Edelmetallschicht schützt wirkungsvoll gegen diese Einflüsse.

In einer weiteren bevorzugten Ausführungsform der Erfindung ist die Edelmetallschicht des optischen Sensors durch Gasphasenabscheidung aufgetragen. Besonders vorteilhaft erweist sich hierbei eine Schichtdicke zwischen 20 und 200 nm, da hierbei eine optische Isolation gegenüber Fremdlicht gewährleistet ist.

Nach einer besonders bevorzugten Ausführungsform der Erfindung ist die Edelmetallschicht aus Gold, Platin, Palladium oder einer Kombination daraus. Diese Materialien verhalten sich inert gegenüber wässrigen Lösungen bzw. gegenüber in der Biotechnologie oder Pharmazie üblichen Zellkultur- oder Fermentationsmedien. Gleichzeitig sind Edelmetalle beständige Materialien und können der Matrix zusätzlich zu Festigkeit und Robustheit verhelfen.

In einer weiteren bevorzugten Ausgestaltung der Erfindung wird die Aufgabe weiterhin durch eine Vorrichtung gemäß Anspruch 6 gelöst. Die Vorrichtung zur Aufnahme eines Mediums weist mindestens einen erfindungsgemäßen optischen Sensor auf, der einen oder mehrere Parameter in dem Medium misst. Im Wesentlichen enthält der Sensor drei übereinander gelagerte Schichten. Als Basisschicht dient ein transparenter Träger. Auf diesem sitzt eine Matrix, die wenigstens einen Fluoreszenzfarbstoff enthält. Zum Schutz der letztgenannten Schicht ist auf dieser eine Edelmetallschicht aufgebracht. Durch diese Edelmetallschicht wird eine optische Isolierung gegenüber Fremdlichteinflüssen und Fluorophoren gewährleistet. Das Fluoreszenzlicht von in einer den Sensor umgebenden Kulturbrühe befindlichen Fluorophoren, wie z.B. NADPH oder Riboflavin, wird durch die Edelmetallschicht isoliert und ein Einfluss der Fluorophore auf die Messung verhindert, bzw. stark herabgesetzt. Zusätzlich wird die Empfindlichkeit gegenüber Gamma-Strahlung stark herabgesetzt. Auch hierdurch wird ein besseres Signal-Rausch-Verhältnis, sowie eine allgemein höhere Sensitivität des Sensorelementes gegenüber seiner Messgröße erreicht. Zugleich verhalten sich Edelmetalle inert gegenüber wässrigen Lösungen bzw. gegenüber in der Biotechnologie oder Pharmazie üblichen Zellkultur- oder Fermentationsmedien. Die Edelmetallschicht erfüllt zusätzlich Sicherheits- und Stabilisierungsfunktionen gegenüber der sich darunter befindlichen Sensorchemie in Form von der den mindestens einen Fluoreszenzfarbstoff enthaltenden Matrix.

Weiterhin ist die Matrix des optischen Sensors porös und die Edelmetallschicht verschließt diese poröse Matrix nicht, da der Kontakt der Sensorchemie zum vermessenden Medium oftmals weiterhin möglich sein muss. Optische Sensoren, die dies erfordern, können somit das Medium direkt kontaktieren. Dies wird erreicht, indem die Rauhtiefe der Oberfläche im Wesentlichen einen höheren Wert besitzt als die Schichtdicke der Edelmetallschicht. Eine poröse Matrix mit nicht ebener Oberfläche besitzt zusätzlich den Vorteil, dass die Aufbringung der Edelmetallschicht einfach und kostengünstig erfolgt, da eine derartige Oberfläche der darauf aufzubringenden Edelmetallschicht eine entsprechende Struktur gibt, welche die poröse Matrix nicht verschließt. Die Edelmetallschicht selber muss nicht erneut perforiert oder entsprechend stellenweise aufgebracht werden. Des weiteren werden durch die Auftragung der Edelmetallschicht die Öffnungen an der Oberfläche querschnittstechnisch verfeinert was ein kostengünstiges Herstellungsverfahren der Matrix erlaubt.

Gemäß einer bevorzugten Ausführungsform der Erfindung ist die Vorrichtung durch Strahlung unter Erhalt der Funktionsfähigkeit des optischen Sensors sterilisierbar. Die Empfindlichkeit gegenüber einer Sterilisierung, beispielsweise mittels ionisierender Strahlung, Gammastrahlung ionisierender Strahlung, Gammastrahlung, UV-C-, Beta- oder Elektronenstrahlung ist durch die Edelmetallschicht stark herabgesetzt. Die durch die Strahlung gebildeten reaktiven Ionen und Radikale in der den Sensor umgebenden Gasphase reagieren nicht mehr mit der Matrix bzw. dem immobilisierten Fluoreszenzfarbstoff selbst. Somit wird ein besseres Signal-Rausch-Verhältnis, sowie eine allgemein höhere Sensitivität des optischen Sensors gegenüber seiner Messgröße erreicht. Die Messgrößen können hierbei z.B. der pH-Wert, der Sauerstoffwert oder andere Parameter sein.

Gemäß einer weiteren bevorzugten Ausführungsform der Erfindung ist die Matrix des optischen Sensors der Vorrichtung hydrophil. Besondere Ausführungen können eine Sol-Gel-Matrix oder ein Hydrogel sein, in welchem der Fluoreszenzfarbstoff immobilisiert vorliegt. Die hydrophile Eigenschaft ist besonders für optische Sensoren nötig, deren in der Matrix eingebettete Fluoreszenzfarbstoff für ein wässriges Medium zugänglich sein muss. Optische Sensoren, welche eine hydrophile Matrix aufweisen sind naturgemäß äußerst sensibel gegenüber einer Sterilisierung, z.B. mittels Gammastrahlung. Die Edelmetallschicht schützt wirkungsvoll gegen diese Einflüsse.

In einer weiteren bevorzugten Ausgestaltung der Erfindung ist die Edelmetallschicht des optischen Sensors durch Gasphasenabscheidung aufgetragen. Besonders vorteilhaft erweist sich hierbei eine Schichtdicke zwischen 20 und 200 nm, da hierbei eine optische Isolation gegenüber Fremdlicht gewährleistet ist.

Nach einer besonders bevorzugten Ausführungsform der Erfindung ist die Edelmetallschicht aus Gold, Platin, Palladium oder einer Kombination daraus. Diese Materialien verhalten sich inert gegenüber wässrigen Lösungen bzw. gegenüber in der Biotechnologie oder Pharmazie üblichen Zellkultur- oder Fermentationsmedien. Gleichzeitig sind Edelmetalle beständige Materialien und können, der Matrix zusätzlich zu Festigkeit und Robustheit verhelfen.

Nach einer anderen bevorzugten Ausführungsform der Erfindung weist die Vorrichtung einen Sender und/oder Empfänger für eine drahtlose Kommunikation auf. Somit können Messergebnisse ohne Kabel übertragen werden, und auch Anweisungen können kabellos an den optischen Sensor bzw. die Vorrichtung gegeben werden, wie beispielsweise die Messfrequenz. Beispiele hierfür sind die RFID- oder Bluetooth-Technologie.

Bei einem bevorzugtem Verfahren gemäß der Erfindung wird der zweite Teil der Aufgabe durch ein Verfahren gemäß Anspruch 12 gelöst. Bei dem erfindungsgemäßem Verfahren werden bei der Herstellung eines optischen Sensors im Wesentlichen zwei Schritte angewendet: Zum einen das Aufbringen einer mindestens einen Fluoreszenzfarbstoff aufweisenden Matrix auf eine transparente Trägerschicht und zum anderen das Aufbringen einer Edelmetallschicht auf die Matrix. Durch die Edelmetallschicht wird eine optische Isolierung gegenüber Fremdlichteinflüssen und Fluorophoren gewährleistet. Das Fluoreszenzlicht von in einer den Sensor umgebenden Kulturbrühe befindlichen Fluorophoren, wie z.B. NADPH oder Riboflavin, wird durch die Edelmetallschicht isoliert und ein Einfluss der Fluorophore auf die Messung verhindert, bzw. stark herabgesetzt. Zusätzlich wird die Empfindlichkeit gegenüber Gamma-Strahlung stark herabgesetzt. Auch hierdurch wird ein besseres Signal-Rausch-Verhältnis, sowie eine allgemein höhere Sensitivität des Sensorelementes gegenüber seiner Messgröße erreicht. Zugleich verhalten sich Edelmetalle inert gegenüber wässrigen Lösungen bzw. gegenüber in der Biotechnologie oder Pharmazie üblichen Zellkultur- oder Fermentationsmedien. Die Edelmetallschicht erfüllt zusätzlich Sicherheits- und Stabilisierungsfunktionen gegenüber der sich darunter befindlichen Sensorchemie in Form von der den mindestens einen Fluoreszenzfarbstoff enthaltenden Matrix.

In besonders bevorzugter Ausführungsform des Verfahrens gemäß der Erfindung wird die Edelmetallschicht mit Gasphasenabscheidung auf die Matrix aufgetragen. Die Gasphasenabscheidung kann mittels thermischem Aufdampfen erfolgen. Verschiedene Varianten der CGA sind beispielsweise die Glühwendel-, Laser- oder die Lichtbogenverdampfung. Besonders bevorzugt kann die Edelmetallschicht mit einer physikalischen Gasphasenabscheidung (PGA) bzw. Kathodenzerstäubung aufgebracht werden. Die PGA zum Aufbringen der Edelmetallschicht läuft bevorzugt bei einem Druck zwischen 10⁻² Pa und 10 Pa, einer Sputterspannung zwischen 800 V und 3000 V und einem Sputterstrom zwischen 10 mA und 50 mA ab. Verschiedene Varianten sind z.B. die Gleichstrom-, Hochfrequenz- sowie Magnetronzerstäubung, oder Mischformen davon. Besonders bevorzugt ist die Magnetronzerstäubung bei einem Druck von 1 Pa, einem Sputterstrom von 50 mA und einer Sputterzeit von 5 Minuten. Bei der Kathodenzerstäubung wird die zu beschichtende Probe während des Prozesses kaum erwärmt und damit geschont. Mit dieser Methode kann in schneller, effektiver und kostengünstiger Weise eine entsprechend dünne Schicht gleichmäßig aufgetragen werden.

Bei einem besonders bevorzugtem Verfahren gemäß der Erfindung wird die Aufgabe weiterhin durch ein Verfahren gemäß Anspruch 14 gelöst. Bei dem erfindungsgemäßem Verfahren werden zur Herstellung einer Vorrichtung im Wesentlichen zwei Schritte angewendet: Der optische Sensor wird mit der Vorrichtung zur Aufnahme des Mediums kombiniert. Die Vorrichtung wird außerdem mit Strahlung bestrahlt. Es können auch mehrere optische Sensoren mit der Vorrichtung kombiniert werden, wobei ein optischer Sensor mindestens einen Parameter in einem Medium bestimmen kann. Die Funktionsfähigkeit des optischen Sensors bleibt trotz der Bestrahlung erhalten. Gleichzeitig ist der optische Sensor gegen Fremdlichteinflüsse und den Einfluss von Fluorophoren auf die Messung geschützt.

Bei einem bevorzugtem Verfahren gemäß der Erfindung wird das Bestrahlen der Vorrichtung mittels ionisierender Strahlung, beispielsweise durch Gammastrahlung, UV-C-, Beta- oder Elektronenstrahlung, vollzogen.

Bei einem weiteren besonders bevorzugtem Verfahren wird für die Vorrichtung ein Behälter aus Kunststoff mit zumindest teilweise flexiblen Wänden verwendet. Derartige Behälter sind kostengünstig herzustellen. Im Falle von Einwegprodukten entfällt zudem eine zeit- und kostspielige Reinigung. Ein oder mehrere optische Sensoren können in einen Behälter aus Kunststoff implementiert werden. Die Sensormessleistung bleibt trotz einer nötigen Sterilisation des Kunststoffbehälters mit Strahlung erhalten.

Die Erfindung soll an dem nachstehenden Ausführungsbeispiel näher erläutert werden.

### Beispiel:

Kunststoffbehälter (Cultibag RM, Sartorius Stedim Biotech GmbH, Göttingen/Volumen: 10 L) werden mit den erfindungsgemäßen optischen Sensoren (pH-Sensoren Typ HP8, Presens GmbH, Regensburg auf Polycarbonat-Kappe) ausgestattet. Die Goldschicht ist mittels Magnetronzerstäubung (EMITECH K550 Magnetronsputter und Goldtarget; Parameter: Druck: 1 Pa Luftatmosphäre, Sputterstrom: 50 mA, Sputterzeit: 5 Minuten) aufgebracht, wobei die Schichtdicke 150 nm beträgt. Die Sensoren werden direkt neben Sensoren des gleichen Typs ohne Goldschicht mittig im Inneren des Behälters angebracht, wobei die Sensorchemie dem Mittelpunkt des Behälters zugewandt ist. Anschließend wird die Vorrichtung mit 10 L Luft bzw. Stickstoff (N2) gefüllt und in schwarzen, lichtundurchlässigen PE-Beuteln verpackt. Daraufhin erfolgt eine Gamma-Bestrahlung bei 5,8 kGy und 26,2 kGy (Co60-Quelle, Beta-Gamma-Service GmbH & Co. KG, Wiehl).

Nach der Bestrahlung werden die Sensoren aus den Behältern entnommen und mit einem Transmitter (pH-1 mini, Presens GmbH) in Puffern mit pH-Werten von 6,0 und 8,0 vermessen.

Die Empfindlichkeit (hier: Differenz der Phasen bei pH 6,0 und pH 8,0) ist bei den in Stickstoff und Luft bestrahlten Sensoren vergleichbar. Bei einer Dosis von 26,2 kGy weisen die Sensoren eine sehr geringe Empfindlichkeit auf (≤2,80). Die Intensität nimmt vom mit 5,8 kGy zum mit 26,2 kGy bestrahlten Sensor um bis zu 99% (Stickstoff) bzw. 80% (Luft) ab.

Ein nicht mit Gold beschichteter Sensor weist die in nachfolgender Tabelle angegebenen Phasendifferenzen zwischen pH 8,0 und pH 6,0 auf:

| Gas | Dosis Gamma [kGy] | Δ Phase [°] | Amplitudenabnahme |
|---|---|---|---|
| N2 | 5,8 | 27,1 | 99% |
| N2 | 26,2 | 2,7 | |
| Luft | 5,8 | 25,3 | 80 % |
| Luft | 26,2 | 2,8 | |

Ein mit Gold beschichteter Sensor hingegen ist nach 26,2 kGy immer noch sensitiv und hat, verglichen mit einem bei 5,8 kGy bestrahlten Gold-beschichtetem Sensor, nur 3 % seiner Intensität verloren, wie aus nachfolgender Tabelle hervorgeht:

| Gas | Dosis Gamma [kGy] | Δ Phase [°] | Amplitudenabnahme |
|---|---|---|---|
| N2 | 5, 8 | 29,2 | 3 % |
| Luft | 26,2 | 23,8 | |

## Patentansprüche

1. Optischer Sensor zur Bestimmung mindestens eines Parameters in einem Medium, wobei der optische Sensor mindestens eine poröse Matrix aufweist, die wenigstens einen Fluoreszenzfarbstoff enthält, welche von einem transparenten Träger getragen ist und die auf der dem Medium zugewandten Seite eine Edelmetallschicht aufweist, wobei
die poröse Matrix auf der dem Medium zugewandten Seite eine unebene Oberfläche umfasst, und die Rauhtiefe der unebenen Oberfläche der porösen Matrix einen höheren Wert besitzt als die Schichtdicke der Edelmetallschicht, so dass die Edelmetallschicht die poröse Matrix nicht verschließt und die poröse Matrix von dem Medium direkt kontaktierbar ist.

2. Optischer Sensor nach Anspruch 1, welcher durch Strahlung unter Erhalt seiner Funktionsfähigkeit sterilisierbar ist oder zusätzlich die Strahlung ionisierende, Gamma- oder Elektronenstrahlung ist.

3. Optischer Sensor nach einem der vorhergehenden Ansprüche, wobei die poröse Matrix eine Sol-Gel Matrix oder ein Hydrogel ist.

4. Optischer Sensor nach einem der vorhergehenden Ansprüche, wobei die Edelmetallschicht durch Gasphasenabscheidung aufgetragen ist.

5. Optischer Sensor nach einem der vorhergehenden Ansprüche, wobei die Edelmetallschicht eine Dicke von 10 nm bis 200 nm aufweist.

6. Vorrichtung zur Aufnahme eines Mediums, wobei die Vorrichtung einen optischen Sensor gemäß Anspruch 1 aufweist.

7. Vorrichtung nach Anspruch 6, welche durch Strahlung unter Erhalt ihrer Funktionsfähigkeit sterilisierbar ist oder zusätzlich die Strahlung ionisierende, Gamma- oder Elektronenstrahlung ist.

8. Vorrichtung nach einem der Anspruch 7, wobei die poröse Matrix eine Sol-Gel Matrix oder ein Hydrogel ist.

9. Vorrichtung nach einem der Ansprüche 7 oder 8, wobei die Edelmetallschicht durch Gasphasenabscheidung aufgetragen ist.

10. Vorrichtung nach einem der Ansprüche 7 - 9, wobei die Edelmetallschicht eine Dicke von 10 nm bis 200 nm aufweist.

11. Vorrichtung nach einem der Ansprüche 7 - 10, welche einen Sender und/oder Empfänger für eine drahtlose Kommunikation aufweist.

12. Verfahren zum Herstellen eines Optischen Sensors Sensor zur Bestimmung mindestens eines Parameters in einem Medium, umfassend die Schritte:
- Aufbringen einer mindestens einen Fluoreszenzfarbstoff aufweisenden porösen Matrix auf eine transparente Trägerschicht derart, dass die poröse Matrix auf der dem Medium zuzuwendenden Seite eine unebene Oberfläche umfasst;
- Aufbringen einer Edelmetallschicht auf die unebene Oberfläche der dem Medium zuzuwendenen Seite der porösen Matrix derart, dass die Rauhtiefe der unebenen Oberfläche der porösen Matrix einen höheren Wert besitzt als die Schichtdicke der Edelmetallschicht, so dass die Edelmetallschicht die poröse Matrix nicht verschließt und die poröse Matrix von dem Medium direkt kontaktierbar ist.

13. Verfahren nach Anspruch 12, wobei die Edelmetallschicht in einem Druckbereich von 10⁻⁵ bis 10 Pa, einer Sputterspannung zwischen 800 und 3000 V und einem Sputterstrom von 10 - 70 mA mittels Kathodenzerstäubung auf die poröse Matrix aufgetragen wird.

14. Verfahren zur Herstellung einer einen optischen Sensor zum Bestimmen mindestens eines Parameters in einem Medium aufweisenden Vorrichtung nach Anspruch 6, bei der die Funktionsfähigkeit des optischen Sensors nach einer Sterilisation durch Bestrahlen erhalten bleibt, umfassend die Schritte:
- Kombinieren des optischen Sensors mit der Vorrichtung zur Aufnahme des Mediums;
- Bestrahlen der Vorrichtung mittels Strahlung.

15. Verfahren nach Anspruch 14, wobei für die Vorrichtung ein Behälter aus Kunststoff mit zumindest teilweise flexiblen Wanden verwendet wird.

## Claims

1. Optical sensor for determining at least one parameter in a medium, the optical sensor having at least one porous matrix containing at least one fluorescent dye, being carried by a transparent carrier and having a precious metal layer on the side facing the medium, wherein
the porous matrix comprises an uneven surface on the side facing the medium, and the depth of roughness of the uneven surface of the porous matrix has a higher value than the layer thickness of the precious metal layer so that the precious metal layer does not seal off the porous matrix and the porous matrix is directly contactable.

2. Optical sensor according to claim 1, which is sterilizable by radiation while preserving its functionality, or additionally the radiation is ionizing gamma radiation or electron radiation.

3. Optical sensor according to any of the preceding claims, wherein the porous matrix is a sol-gel matrix or a hydrogel.

4. Optical sensor according to any of the preceding claims, wherein the precious metal layer is deposited by means of chemical vapor deposition.

5. Optical sensor according to any of the preceding claims, wherein the precious metal layer has a thickness of 10 nm to 200 nm.

6. Device for receiving a medium, wherein the device has an optical sensor according to claim 1.

7. Device according to claim 6, being sterilizable by radiation while preserving its functionality, or additionally the radiation being ionizing gamma radiation or electron radiation.

8. Device according to claim 7, wherein the porous matrix is a sol-gel matrix or a hydrogel.

9. Device according to any of the claims 7 or 8, wherein the precious metal layer is deposited by means of chemical vapor deposition.

10. Device according to any of the claims 7 to 9, wherein the precious metal layer has a thickness of 10 nm to 200 nm.

11. Device according to any of the claims 7 to 10, having a sender and/or receiver for a wireless communication.

12. Method for producing an optical sensor for determining at least one parameter in a medium, comprising the steps of:
- applying a porous matrix having at least one fluorescent dye on a transparent carrier layer in a way in which the porous matrix comprises an uneven surface on the side to be facing the medium;
- depositing a precious metal layer on the uneven surface of the porous matrix to be facing the medium in a way in which the depth of roughness of the uneven surface of the porous matrix has a higher value than the layer thickness of the precious metal layer so that the precious metal layer does not seal off the porous matrix and the porous matrix is directly contactable.

13. Method according to claim 12, wherein the precious metal layer is deposited on the porous matrix by means of cathode sputtering within a pressure range of 10⁻⁵ to 10 Pa, with a sputtering voltage between 800 and 3000 V and a o current of 10 - 70 mA.

14. Method for producing a device having an optical sensor for determining at least one parameter in a medium according to claim 6, in which the functionality of the optical sensor is preserved after a sterilization by means of radiation, comprising the steps of:
- combining the optical sensor with the device for receiving the medium;
- irradiating the device by means of radiation.

15. Method according to claim 14, wherein a container made of plastic with at least partially flexible walls is used for the device.

## Revendications

1. Un capteur optique pour la détermination d'au moins un paramètre dans un milieu, sachant que le capteur optique présente au moins une matrice poreuse contenant au moins un colorant fluorescent, qui est soutenue par un support transparent et laquelle présente sur le côté orienté vers le milieu une couche de métal noble, sachant que
la matrice poreuse sur le côté orienté vers le milieu comprend une surface non plane, et que la profondeur de rugosité de la surface non plane de la matrice poreuse présente une valeur plus grande que l'épaisseur de la couche de métal noble, de manière que la couche de métal noble ne bouche ou encore ne recouvre pas la matrice poreuse et que la matrice poreuse puisse être directement contactée par le milieu.

2. Un capteur optique d'après la revendication 1, qui peut être stérilisé par rayonnement en maintenant sa capacité fonctionnelle ou sachant que de plus le rayonnement est un rayonnement ionisant, gamma ou électronique.

3. Un capteur optique d'après une des revendications précédentes, sachant que la matrice poreuse est une matrice sol-gel ou un hydrogel.

4. Un capteur optique d'après une des revendications précédentes, sachant que la couche de métal noble est appliquée par dépôt en phase vapeur.

5. Un capteur optique d'après une des revendications précédentes, sachant que la couche de métal noble présente une épaisseur de 10 nm à 200 nm.

6. Dispositif pour la réception d'un milieu, sachant que le dispositif présente un capteur optique d'après la revendication 1.

7. Dispositif d'après la revendication 6, lequel peut être stérilisé par rayonnement en maintenant sa capacité fonctionnelle ou sachant que de plus le rayonnement est un rayonnement ionisant, gamma ou électronique.

8. Dispositif d'après la revendication 7, sachant que la matrice poreuse est une matrice sol-gel ou un hydrogel.

9. Dispositif d'après la revendication 7 ou 8, sachant que la couche de métal noble est appliquée par dépôt en phase vapeur.

10. Dispositif d'après une des revendications 7 - 9, sachant que la couche de métal noble présente une épaisseur de 10 nm à 200 nm.

11. Dispositif d'après une des revendications 7 - 10, qui présente un émetteur et/ou un récepteur pour une communication sans fil.

12. Procédé de fabrication d'un capteur optique capteur pour la détermination d'au moins un paramètre dans un milieu, comprenant les étapes suivantes :
- appliquer une matrice poreuse contenant au moins un colorant fluorescent sur une couche de support transparente de manière que la matrice poreuse comprenne une surface non plane sur le côté à orienter vers le milieu ;
- appliquer une couche de métal noble sur la surface non plane du côté à orienter vers le milieu de la matrice poreuse de manière que la profondeur de rugosité de la surface non plane de la matrice poreuse présente une valeur plus grande que l'épaisseur de la couche de métal noble, de manière que la couche de métal noble ne bouche ou encore ne recouvre pas la matrice poreuse et que la matrice poreuse puisse être directement contactée par le milieu.

13. Procédé d'après la revendication 12, sachant que la couche de métal noble est appliquée sur la matrice poreuse par pulvérisation cathodique dans une gamme de pressions allant de 10⁻⁵ à 10 Pa, une tension de pulvérisation cathodique (*sputter*) entre 800 et 3000 V et un courant de pulvérisation cathodique de 10 - 70 mA.

14. Procédé de fabrication d'un dispositif d'après la revendication 6 présentant un capteur optique pour la détermination d'au moins un paramètre dans un milieu, dans lequel la capacité fonctionnelle du capteur optique après la stérilisation par rayonnement est préservée, comprenant les étapes suivantes :
- combiner le capteur optique avec le dispositif pour la réception d'un milieu ;
- irradier le dispositif par un rayonnement.

15. Procédé d'après la revendication 14, sachant que pour le dispositif on utilise un récipient en matière plastique avec des parois flexibles au moins en partie.
